**Europäisches Patentamt**

**European Patent Office**

**Office européen des brevets**

(19)

(11) Veröffentlichungsnummer: **0 267 381 B1**

# EUROPÄISCHE PATENTSCHRIFT

(12)

(45) Veröffentlichungstag der Patentschrift: **26.06.91**

(51) Int. Cl.5: **G01B 11/18**, G01M 11/08

(21) Anmeldenummer: **87112646.2**

(22) Anmeldetag: **29.08.87**

(54) **Einrichtung und Verwendung eines Lichtwellenleiter-Sensors für die Messung minimaler Dehnungen.**

(30) Priorität: **10.11.86 DE 3638345**

(43) Veröffentlichungstag der Anmeldung:
**18.05.88 Patentblatt 88/20**

(45) Bekanntmachung des Hinweises auf die
Patenterteilung:
**26.06.91 Patentblatt 91/26**

(84) Benannte Vertragsstaaten:
**BE CH DE FR GB IT LI NL SE**

(56) Entgegenhaltungen:
**EP-A- 0 120 999**
**EP-A- 0 144 509**
**DE-A- 3 415 855**
**US-A- 4 515 473**

**PATENT ABSTRACTS OF JAPAN, Band 8, Nr.
141 (P-283)[1578], 30. Juni 1984; & JP-A-59 40
202 (HITACHI DENSEN K.K.)**

(73) Patentinhaber: **Felten & Guilleaume Energietechnik AG**
**Schanzenstrasse 24-30 Postfach 80 50 01**
**W-5000 Köln 80(DE)**

(72) Erfinder: **Federmann, Helmut, Dr.**
**Holunderweg 17**
**W-5060 Bergisch Gladbach(DE)**
Erfinder: **Levacher, Friedrich Karl, Dr.**
**Medardusstrasse 24**
**W-5024 Brauweiler(DE)**
Erfinder: **Noack, Georg, Dr.-Ing.**
**Eschenweg 9**
**W-5060 Bergisch Gladbach 2(DE)**
Erfinder: **Kraus, Anton, Dipl.-Ing.**
**Olperstrasse 124**
**W-5063 Overath(DE)**

**Beschreibung**

Die Erfindung betrifft eine Meßeinrichtung mit einem Lichtwellenleiter (LWL) für die Messung minimaler Dehnungen eines Bauteils, bei welcher der LWL mit diesem Bauteil verbunden ist und folgende Einrichtungsteile in Reihe geschaltet (nacheinander angeordnet) sind: ein Lichtsender, ein Polarisator, eine Einkopplung, der LWL, ein Analysator, ein Lichtempfänger und ein Auswertegerät.

Eine solche Meßeinrichtung ist aus der DE-A1-3 415 855 bekannt. Dort ist eine faseroptische Meßeinrichtung zur Erfassung einer an insbesondere großen Bauelementen auftretenden Zugspannung oder Biegung beschrieben, die aus einer am Bauelement angebrachten Lichtleitfaser besteht. Als Lichtleitfaser (LWL) wird eine tordierte Monomode-Lichtleitfaser eingesetzt, in deren eines Ende ein Lichtstrahl eingekoppelt wird, während an deren anderem Ende ein lichtempfindlicher Detektor angeordnet ist, und es wird die durch die Zugspannung oder Biegung bewirkte Drehung der Polarisationsebene des in die Faser eingekoppelten Lichtstrahls in Lichtausbreitungsrichtung zur Auswertung herangezogen.

Die oben erwähnte Meßanordnung - Lichtsender, Polarisator, LWL, Analysator, Lichtempfänger und Auswertegerät - ist auch aus der EP-A2-0 144 509 bekannt. Dort ist eine faseroptische interferometrische Meßeinrichtung beschrieben, in die ein Monomode-LWL eingesetzt ist, der mittels verschiedener, den LWL umfassender Strukturen doppelbrechend gemacht wird, d. h. der LWL spaltet ein Lichtbündel in zwei senkrecht zueinander polarisierte Teilbündel auf, die sich mit unterschiedlicher Strahlgeschwindigkeit fortpflanzen. Die Meßeinrichtung nutzt die relative Änderung der beiden Strahlgeschwindigkeiten, um eine an den LWL angelegte Kraft zu erfassen und sie in eine Veränderung der Interferenz und schließlich in ein elektrisches Signal zu übertragen.

Der Erfindung liegt die Aufgabe zugrunde, zu diesen beiden Meßeinrichtungen eine weitere faseroptische Meßeinrichtung zu schaffen, mit der Verformungen im μm-Bereich erfaßt werden können und deren Anwendung für Dehnugsmessungen an verschiedenen Objekten einfach ist.

Die Lösung dieser Aufgabe wird durch die kennzeichnenden Merkmale des Anspruchs 1 angegeben. Sie besteht im wesentlichen darin, daß als LWL ein polarisationserhaltender, doppelbrechender Monomode-LWL eingesetzt ist, und die Teile Polarisator, Einkopplung, LWL und Analysator zu einer Gruppe, dem LWL-Phasensensor, zusammengefaßt sind. In den LWL wird linear polarisiertes Licht eingekoppelt, und die bei einer Längenänderung des LWL auftretende Phasendifferenzänderung wird von einem Empfänger und Auswertegerät erfaßt.

Der für den Phasensensor erforderliche LWL hat einen speziellen Aufbau, der eine Konfigurations-Doppelbrechung hervorruft. Dies kann beispielsweise dadurch erreicht werden, daß um einen LWL-Kern (die optische Faser) ein elliptischer Mantel aufgebracht ist, der eine permanente anisotrope (richtungsabhängige) mechanische Spannung hervorruft. Oder es ist umgekehrt um einen elliptischen Kern ein runder Mantel aufgebracht. Oder es ist um einen runden Kern ein optisch anisotroper Mantel dergestalt aufgebracht, daß der Brechungsindex des Mantels in zwei zueinander senkrechten Achsen unterschiedlich ist.

Der Anspruch 2 betrifft eine vorteilhafte Weiterbildung der Meßeinrichtung selbst, die Ansprüche 3 und 4 betreffen ihre Ausbildung zur überwachung von Bauteilen auf kritische Verformungen, und die Ansprüche 5 und 6 betreffen vorteilhafte Weiterbildungen der Meßeinrichtung für Dehnungsmessungen.

Der wesentliche Vorteil der Erfindung liegt darin, daß man mit dem LWL-Phasensensor in Verbindung mit den optoelektronischen Sende-, Empfangs- und Auswertegeräten einen hochempfindlichen LWL-Sensor für minimale Dehnungen erhält, womit man Verformungen im μm-Bereich erfassen kann. Damit eignet er sich besonders als Sensor für die Messung geringer Dehnungen, wie Durchbiegungen von Trag- oder Stützelementen.

Ausführungsbeispiele der Erfindung sind in der Zeichnung dargestellt und werden im folgenden näher beschrieben. Es zeigen

Fig. 1     die schematische Darstellung einer Labor-Meßeinrichtung mit einem LWL-Phasensensor,

Fig. 2     einen abgemantelten Monomode-LWL mit Konfigurations-Doppelbrechung,

Fig. 3     die graphische Darstellung des am Ausgang des Phasensensors erhaltenen Signals,

Fig. 4     das Blockschaltbild eines überwachungssystems mit einem LWL-Phasensensor, und

Fig. 5     die Anordnung des überwachungssystems mit mehreren LWL-Phasensensoren an bzw. in einem Flugzeugheck.

a) zur Einrichtung:

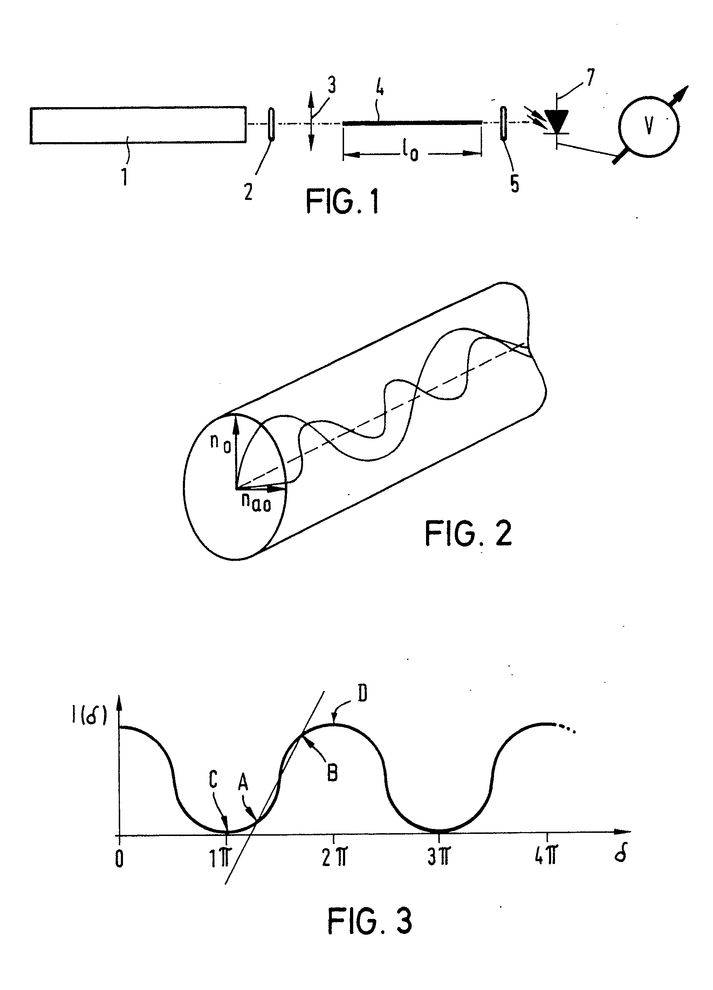

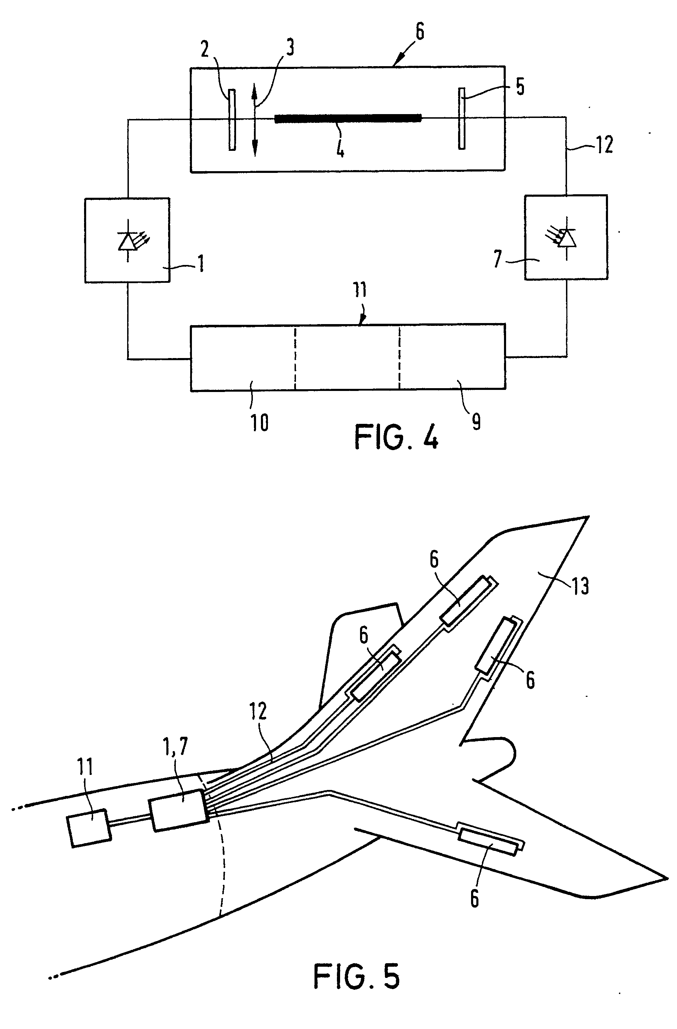

Wie die Fig. 1 und 4 zeigen, besteht die Einrichtung des Lichtwellenleiters für die Messung minimaler Dehnungen darin, daß als LWL ein polarisationserhaltender, doppelbrechender Monomode-LWL 4 eingesetzt ist. Dieser hat beispielsweise um den runden Kern einen elliptischen Mantel, der eine permanente anisotrope mechanische Spannung hervorruft. Der LWL 4 ist mit einem vorgeschalteten Polarisator 2 sowie einer Einkopplung 3 und mit einem nachgeschalteten Analysator 5 zu dem LWL-Phasensensor 6 zusammengefaßt. Diesem sind ein Lichtsender 1 vorgeschaltet, sowie ein Lichtempfänger 7 und ein elektronisches Auswertegerat 11 nachgeschaltet, wobei LWL-Leitungen oder -Kabel 12 als Verbindungen eingesetzt sind.

Als Sender 1 ist ein Laser oder eine Laserdiode, und als Empfänger 7 ist eine Fotodiode eingesetzt. In dem Auswertegerät 11 ist empfängerseitig ein Rechner 9 und senderseitig eine Steuerung 10 für den Sender eingebaut.

b) zur Funktionsweise:

Anhand der Fig. 2 und 3 läßt sich die Funktionsweise des LWL-Phasensensors wie folgt erläutern:
Durch die anisotrope Spannung wird der Lichtwellenleiter doppelbrechend, d. h. eine einfallende Lichtwelle wird in zwei Teilwellen aufgespalten. Die Hauptachsen der Ellipse sind gleichzeitig die optischen Achsen (senkrecht zur LWL-Achse, räumlich fest orientiert) mit den Brechungsindizes $n_o$ und $n_{ao}$. Optische Anisotropie und Doppelbrechung bedeuten, daß die Geschwindigkeit der Lichtausbreitung in charakteristischer Weise vom Brechungsindex des Glases abbhängt. Die optischen Achsen kennzeichnen dabei die Polarisationsrichtungen, für welche die Brechungsindexdifferenz $n_o - n_{ao}$ maximal wird.

Linear polarisiertes Licht wird beim Durchgang durch diesen LWL um die Phasendifferenz $\delta$ verschoben. Die Ausbreitung von linear polarisiertem Licht in dem doppelbrechenden LWL mit der vorerwähnten Achslage kann so beschrieben werden, daß man die einfallende Welle durch überlagerung von zwei Wellen darstellt, deren Polarisationsrichtungen mit den optischen Achsen übereinstimmen. Nach dem Durchlaufen des LWL werden die beiden Wellen wieder über lagert, wobei die Phasendifferenz $\delta$ zu berücksichtigen ist. Dies führt zu unterschiedlichen Polarisationsformen (linear, elliptisch, zirkular) des von dem LWL transmittierten Lichts, und eine optoelektronische Analyse des Polarisationszustandes erlaubt die Bestimmung von $\delta$.

Koppelt man linear polarisiertes Licht unter 45° zur optischen Achse in den LWL ein, so erhält man am Ausgang des LWL nach einem Polarisationsfilter ein Signal der Intensität I, das beschrieben werden kann durch die Funktion

$$I = I_o (1 + \cos \delta).$$

Darin ist
$I_o$ die Intensität des optischen Signals am Eingang des LWL und $\delta$ die Phasendifferenz gemäß der Formel

$$\delta = (2\pi/\lambda) (n_o - n_{oa}) l_o$$

mit der Brechungsdifferenz $n_o - n_{ao} = c \cdot s$
und $\lambda$ = Wellenlänge des eingekoppelten Lichts
  $c$ = Brewsterkonstante des Kernmaterials
  $s$ = mechanische Spannung
  $l_o$ = Länge des LWL.
Die Fig. 3 zeigt die graphische Darstellung dieser Funktion. Da aber wie ersichtlich die Brechungsindexdifferenz nur von der mechanischen Spannung abhängt, wird die Phasendifferenzänderung $\Delta\delta$ nur noch von der Längenänderung $\Delta\ l_o$ abhängig gemäß der Formel

$$\Delta\delta = (2\pi/\lambda) \cdot K \cdot \Delta\ l_o$$

mit $K$ = optomechanische Konstante des LWL. Daraus ergibt sich, daß man aus der Phasendifferenzänderung des in den LWL eingekoppelten Lichts direkt die Längenänderung des LWL bestimmen kann.

Demgemäß sind die Messungen minimaler Dehnungen (Längenänderungen) so auszuführen, daß linear polarisiertes Licht in den polarisationserhaltenden, doppelbrechenden Monomode-LWL 4 eingekoppelt wird, das beim Durchgang durch den LWL um die Phasendifferenz $\delta$ verschoben wird, und die bei einer Längenänderung des LWL auftretende definierte Phasendifferenzänderung $\Delta\delta$ von dem optoelektronischen Auswertegerät 11 erfaßt und als Maß für die geometrische Änderung gewertet wird.

Erste Messungen ergaben, daß eine Änderung der Phasendifferenz von $\pi$ durch eine Längenänderung von etwa 1,5 $\mu$m erzeugt wird. Damit eignet sich dieser LWL-Sensor besonders als Sensor für die Messung geringer Dehnungen, wie Durchbiegungen von Trag- oder Stützelementen.

c) zum Meßverfahren:

Anhand der Fig. 3 sei zum Meßverfahren noch ausgeführt:
Die Empfindlichkeit kann über die LWL-Länge $l_o$ so angepaßt werden, daß der lineare Bereich A-B der Kurve I = f ($\delta$)nicht überschritten wird. Man hat dann eine meßtechnisch sehr einfach zu handhabende Proportionalität zwischen der gemessenen Strahlungsleistung und der angelegten mechanischen Spannung, die nach dem Hook'schen Gesetz in Längenänderung skaliert werden kann. Bei einer ersten Anwendung genügte eine Längenänderung $\Delta$ l von ca. 5 $\mu$m bei einer LWL-Länge $l_o$ = 500 mm zum Durchfahren des Meßbereichs C-D. Bei angepaßter Elektronik ist damit eine Dehnungs-

messung mit einer Anzeigegenauigkeit $\Delta l/l_o$ um $10^{-5}$ möglich. Die Meßgeschwindigkeit hängt bei stabilem Betrieb der Lichtquelle nur von der nachgeschalteten Elektronik ab.

Der Meßbereich kann verdoppelt werden, wenn man das Meßlicht etwa mit Hilfe eines Gitters in drei Kanäle aufspaltet. Dann ist es möglich, die Phasendifferenz $\delta$ modulo $2\pi$ (Modul der Kongruenz) mit etwas Arithmetik mit ähnlicher Genauigkeit zu bestimmen. Insbesondere bei dynamischen Vorgängen kann dann auch das Intervall $2\pi$ überschritten werden. Zwar wird dabei natürlich die Meßgeschwindigkeit reduziert, aber indem die Zahl der Phasenverschiebungen um $2\pi$ in beiden Richtungen, also vorzeichenrichtig erfaßt wird, können auch größere Längenänderungen durch einen elektronischen Zählvorgang bestimmt werden.

Wie aus den vorstehenden Ausführungen hervorgeht, bietet das Meßverfahren mit dem erfindungsgemäßen LWL-Phasensensor eine vorzügliche Kombination von hoher Empfindlichkeit und großem Meßbereich.

d) zur Anwendung:

Das Einsatzgebiet des LWL-Phasensensors umfaßt die integrale überwachung von Metall-und Faserverbundkonstruktionen auf kritische Verformungen und Strukturschäden. Dazu wird der LWL-Sensor mit dem zu überwachenden Bauteil mechanisch fest und dauerhaft verbunden. Bei Bauteilen aus faserverstärkten Kunststoffen ist auch eine Einbettung im Lami nat möglich. Mit diesen LWL-Sensoren können insbesondere Flugzeugkomponenten, Maschinenteile oder Brückenkonstruktionen auf Durchbiegung überwacht werden, so daß die Gefahren eines Betriebsversagens reduziert werden.

So zeigt die Fig. 5, wie mehrere LWL-Phasensensoren 6 in den bruchgefährdeten Zonen eines Flugzeugs, etwa an verschiedenen Stellen des Leitwerks 13, angeordnet sind, und wie von dort LWL-Kabel 12 zu dem im Kont rollraum angeordneten optoelektronischen Sender 1 und Empfänger 7 sowie dem Auswertegerät 11 geführt sind.

**Ansprüche**

1. Meßeinrichtung mit einem Lichtwellenleiter (LWL) für die Messung minimaler Dehnungen eines Bauteils, bei welcher der LWL mit diesem Bauteil verbunden ist und folgende Einrichtungsteile in Reihe geschaltet sind: ein Lichtsender (1), ein Polarisator (2), eine Einkopplung (3), der LWL (4), ein Analysator (5), ein Lichtempfänger (7) und ein Auswertegerät (11), **dadurch gekennzeichnet, daß**

   - als LWL (4) ein polarisationserhaltender, doppelbrechender Mono-mode-LWL eingesetzt ist, wozu dieser um den runden Kern einen elliptischen Mantel hat, der eine permanente anisotrope mechanische Spannung hervorruft,
   - die Teile Polarisator (2), Einkopplung (3), LWL (4) und Analysator (5) zu einer Gruppe, dem LWL-Phasensensor (6), zusammengefaßt sind, und
   - der LWL-Sensor (6) mit dem Sender (1) und dem Empfänger (7), und diese beiden mit dem Auswertegerät (11) mittels LWL-Leitungen oder -Kabel (12) verbunden sind.

2. Meßeinrichtung nach Anspruch 1, **dadurch gekennzeichnet, daß** als Sender (1) ein Laser oder eine Laserdiode und als Empfänger (7) eine Fotodiode eingesetzt, und in der Auswerteeinrichtung (11) empfängerseitig ein Rechner (9) und senderseitig eine Steuerung (10) für den Sender eingebaut ist.

3. Meßeinrichtung nach Anspruch 1 oder 2, **dadurch gekennzeichnet, daß** der LWL-Phasensensor (6) zur integralen überwachung von Metall-und Faserverbundkonstruktionen auf kritische Verformungen und Strukturschäden mit dem zu überwachenden Bauteil (13) mechanisch fest und dauerhaft verbunden, oder bei Bauteilen aus faserverstärkten Kunststoffen im Laminat eingebettet ist, womit insbesondere Flugzeugkomponenten (13), Maschinenteile oder Brückenkonstruktionen auf Durchbiegung überwacht werden.

4. Meßeinrichtung nach Anspruch 3, **dadurch gekennzeichnet, daß** mehrere LWL-Phasensensoren (6) in den bruchgefährdeten Zonen eines Flugzeugs (13) angeordnet, und von dort LWL-Kabel (12) zu dem im Kontrollraum angeordneten optoelektronischen Sender (1) und Empfänger (7) sowie dem Auswertegerät (11) geführt sind.

5. Meßeinrichtung nach einem der Ansprüche 1 bis 4, **dadurch gekennzeichnet, daß** das polarisierte Licht unter $45°$ zur optischen Achse in den LWL eingekoppelt wird.

6. Meßeinrichtung nach Anspruch 5, **dadurch gekennzeichnet, daß** zur Erweiterung des Längenmeßbereiches die Zahl der Phasenverschiebungen um $2\pi$ in beiden Richtungen, also vorzeichenrichtig, erfaßt wird.

**Claims**

1. A measuring device comprising an optical waveguide (OWG) for the measurement of minimal elongations of a component, wherein the OWG is connected to this component and the following device members are connected in series: a light transmitter (1), a polarizer (2), an input-coupling unit (3), the OWG (4), an analyzer (5), a light receiver (7) and an evaluator (11), characterised in that
   - a polarization-maintaining, birefringent monomode OWG is used as OWG (4), for which purpose the latter is provided around the circular core with an elliptical casing which produces a permanent, anisotropic, mechanical stress,
   - the device members comprising the polarizer (2), the input-coupling unit (3), the OWG (4) and the analyzer (5) are combined to form a group - the OWG-phase sensor (6) and
   - the OWG-sensor (6) is connected to the transmtiter (1) and the receiver (7), and the two latter are connected to the evaluator (11) by means of OWG-conductors or cables (12).

2. A measuring device as claimed in Claim 1, characterised in that a laser or laser diode is used as transmitter (1) and a photo-diode is used as receiver (7) and that in the evaluator (11) a computer (9) is installed at the receiver end and a control unit (10) for the transmitter is installed at the transmitter end.

3. A measuring device as claimed in Claim 1 or 2, characterised in that for the integral monitoring of metal and fibre compound structures in respect of critical deformations and structural damage, the OWG-phase sensor (6) is connected in a mechanically stable and durable fashion to the component (13) which is to be monitored, or in the case of components made of fibre-reinforced synthetic resins is embedded in the laminate, whereby in particular aircraft components (13), machine components or bridge structures are monitored in respect of deflection.

4. A measuring device as claimed in Claim 3, characterised in that a plurality of OWG-phase sensors (6) are arranged in those zones of an aircraft (13) which are subject to risk of fracture and from here OWG-cable (12) leads to the opto-electronic transmitter (1) and receiver (7) arranged in the control room, and to the evaluator (11).

5. A measuring device as claimed in one of Claims 1 to 4, characterised in that the polarized light is input-coupled into the OWG at an angle of less than 45° to the optical axis.

6. A measuring device as claimed in Claim 5, characterised in that in order to extend the length measurement range, the number of phase shifts by $2\pi$ is recorded in both directions, thus with the correct sign.

**Revendications**

1. Installation de mesure comprenant un guide de lumière pour mesurer les allongements minimum d'un composant auquel est relié le guide de lumière, et comportant les parties d'installation suivantes branchées en série : un photoémetteur (1), un polariseur (2), un injecteur (3), le guide de lumière (4), un analyseur (5), un photorécepteur (7) et un dispositif d'exploitation (11), installation caractérisée en ce que :
   - le guide de lumière (4) est un guide de lumière monomode à double réfraction conservant la polarisation dont le noyau circulaire est entouré d'une gaine elliptique engendrant une tension mécanique anisotrope permanente,
   - les parties polarisantes (2), injecteur (3), guide de lumière (4) et analyseur (5) sont réunis en un groupe formant le capteur de phase de guide de lumière (6),
   - le capteur de guide de lumière (6) avec l'émetteur (1) et le récepteur (7) sont reliés au dispositif d'exploitation (11) par des lignes ou câbles à guide de lumière (12).

2. Installation de mesure selon la revendication 1, caractérisée en ce que l'émetteur (1) est un laser ou une diode laser et le récepteur (7) est une photodiode et le dispositif d'exploitation (11) comporte du côté de la réception un calculateur (9) et du côté de l'émission une commande (10) pour l'émetteur.

3. Installation de mesure selon la revendication 1 ou 2, caractérisée en ce que le capteur de phase de guide de lumière (6), relié de manière mécaniquement solidaire et permanente au composant (13) à surveiller pour assurer la surveillance intégrale quant aux déformations critiques et endommagement de sctucture de construction métallique ou de construction composite en matière synthétique renforcée par des fibres, est intégré au laminat, permettant notamment de surveiller des composants (13), des parties de machine ou des constructions de pont, pour en contrôler la flexion.

4. Installation de mesure selon la revendication 3, caractérisée par plusieurs capteurs de phase de guide de lumière (6) installés dans les zones à risque de rupture d'un avion (13) et reliés de là par des câbles à guide de lumière (12) à un émetteur opto-électronique (1) placé dans le local de contrôle pour être transmis au récepteur (7) et au dispositif d'exploitation (11).

5. Installation de mesure selon l'une des revendications 1 à 4, caractérisée en ce que la lumière polarisée est injectée sous un angle de 45° par rapport à l'axe optique dans le guide de lumière.

6. Installation de mesure selon la revendication 5, caractérisée en ce qu'on détecte le nombre de déphasages autour de $2\pi$ dans les deux directions, c'est-à-dire en valeur algébrique par rapport à l'étendue de la plage de mesure des longueurs.

FIG. 1

FIG. 2

FIG. 3

FIG. 4

FIG. 5